# EUROPEAN PATENT APPLICATION

(11) **EP 4 478 788 A1**
(43) Date of publication of application: **18.12.2024**
(21) Application number: 22925822.3
(22) Date of filing: 08.02.2022
(51) Int. Cl.: H04W 48/12, H04W 92/10

(54) **COMMUNICATION DEVICE, NETWORK NODE DEVICE, SYSTEM, AND COMMUNICATION METHOD**

(71) Applicant: NTT DOCOMO, INC., Tokyo 100-6150 (JP)
(72) Inventor: SUZUKI, Yuji, Tokyo 100-6150 (JP); ZUGENMAIER, Alf, Munich, 80335 (DE)
(74) Representative: Hoffmann Eitle
(86) International application number: PCT/JP2022/004928
(87) International publication number: WO 2023/152800

(57) **Abstract**

. The communication apparatus includes: a reception unit configured to receive purpose information indicating a purpose of an API call from a first network node apparatus that performs the API call; and a control unit configured to determine whether to authorize execution of the API call based on the purpose information.

## Description

### Technical Field

The present invention relates to an API call from an external application to a network node apparatus.

### Background Art

In 3GPP (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been developed. In 5G, various radio technologies have been studied in order to satisfy the requirement that the delay in the radio section be less than or equal to 1ms while achieving a throughput greater than or equal to 10Gbps.

In NR, a network architecture including an 5GC (5G Core Network) corresponding to an EPC (Evolved Packet Core) which is a core network in an LTE (Long Term Evolution) network architecture and an NG-RAN (Next Generation-Radio Access Network) corresponding to an E-UTRAN (Evolved Universal Terrestrial Radio Access Network) which is a RAN (Radio Access Network) in the LTE network architecture is under study (for example, Non-Patent Document 1).

Further, for example, an architecture in which a Northbound interface between an NEF (Network Exposure Function) and an AF (Application Function) in a 5G system is configured by a CAPIF (Common Application Programming Interface) framework has been studied (for example, Non-Patent Documents 2 and 3).

### Related Art Document

### Non-Patent Documents

Non-Patent Document 1: 3GPP TS 23.501 V17.2.0 (2021-09)
Non-Patent Document 2: 3GPP TS 29.522 V17.3.0 (2021-09)
Non-Patent Document 3: 3GPP TS 23.222 V17.5.0 (2021-06)

### SUMMARY OF THE INVENTION

### Problems to be Solved by the Invention

In the 3GPP core network, the network node apparatus opens an API (Application Programming Interface) for an external application, and for example, a third party application can call an API for the network node apparatus.

A communication apparatus (e.g., a terminal) that may be affected by an API call exists. However, in the related art, there is no mechanism for determining whether or not the communication apparatus authorizes an API call when the API call is performed from the application to the network node apparatus.

The present invention has been made in view of the above, and an object of the present invention is to provide a technique that enables a communication apparatus that can be affected by an API call to determine whether or not to authorize the API call.

### Means for Solving the Problems

According to the disclosed technique, there is provided a communication apparatus comprising:
a reception unit configured to receive purpose information indicating a purpose of an API call from a first network node apparatus that performs the API call; and
a control unit configured to determine whether to authorize execution of the API call based on the purpose information.

### Effects of the Invention

According to the disclosed technology, it is possible to provide a technology that enables a communication apparatus that can be affected by an API call to determine whether or not to authorize the API call.

### Brief Description of the Drawings

[Fig. 1] FIG. 1 is a diagram for explaining an example of a communication system;
[Fig. 2] FIG. 2 is a diagram for explaining an example of a communication system under a roaming environment;
[Fig. 3] FIG. 3 is a diagram showing an example of an API call;
[Fig. 4] FIG. 4 is a diagram for explaining a problem; [Fig. 5] FIG. 5 is a diagram for explaining an outline of a processing procedure in an embodiment of the present invention;
[Fig. 6] FIG. 6 is a sequence diagram showing a specific example of a processing procedure in an embodiment of the present invention;
[Fig. 7] FIG. 7 is a sequence diagram showing a variation of a processing procedure in an embodiment of the present invention;
[Fig. 8] FIG. 8 is a diagram showing an example of a system including a UE and an AF according to an embodiment of the present invention;
[Fig. 9] FIG. 9 is a diagram showing an example of a system including a UE in an embodiment of the present invention;
[Fig. 10] FIG. 10 is a diagram showing an example of a functional configuration of a base station 10 (and a network node apparatus 30, an authorization server 35, and a resource owner 40) according to an embodiment of the present invention;
[Fig. 11] FIG. 11 is a diagram showing an example of a functional configuration of a terminal 20 (and a resource owner 40) according to the embodiment of the present invention;
[Fig. 12] FIG. 12 is a diagram showing an example of a hardware configuration of an apparatus according to an embodiment of the present invention; and
[Fig. 13] FIG. 13 is a diagram showing an example of a configuration of a vehicle in an embodiment of the present invention.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, an existing technology is used as appropriate. The existing technology is, for example, existing LTE or existing NR (5G), but is not limited to existing LTE or existing NR.

In the embodiment of the present invention, a radio parameter and the like being "configured" may mean that a predetermined value is pre-configured, or may mean that the radio parameter notified from the network node apparatus 30 or the terminal 20 is configured.

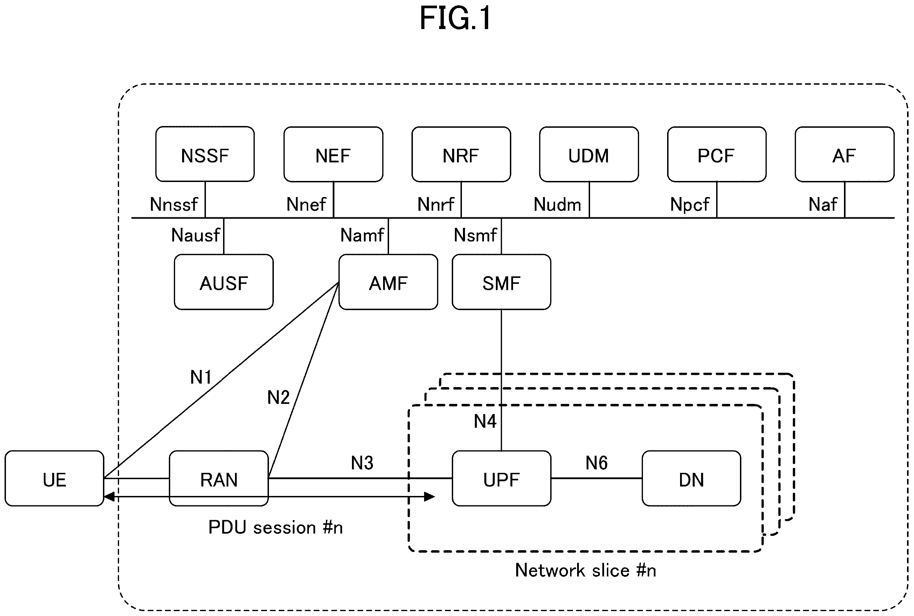

FIG. 1 is a diagram for explaining an example of a communication system. As shown in FIG. 1, the communication system includes a UE which is a terminal 20 and a plurality of network node apparatuses 30. Hereinafter, it is assumed that one network node apparatus 30 corresponds to each function, but one network node apparatus 30 may realize a plurality of functions, or a plurality of network node apparatuses 30 may realize one function. In addition, "connection" described below may be logical connection or physical connection.

Further, each of the base station 10, the terminal 20, and the network node apparatus 30 may be referred to as a "communication apparatus".

A RAN (Radio Access Network) is a network node apparatus 30 having a radio access function, which may include the base station 10 and is connected to a UE, an AMF (Access and Mobility Management Function), and a UPF (User plane function). The AMF is a network node apparatus 30 having functions of termination of a RAN interface, termination of a NAS (Non-Access Stratum), registration management, connection management, reachability management, mobility management, and the like. The UPF is a network node apparatus 30 having functions such as a PDU (Protocol Data Unit) session point for externally interconnecting with a data network (DN), routing and forwarding of packets, and QoS (Quality of Service) handling of a user plane. The UPF and the DN constitute a network slice. In the radio communication network according to an embodiment of the present invention, a plurality of network slices are established.

An AMF is connected to a UE, a RAN, an SMF (Session Management function), an NSSF (Network Slice Selection Function), an NEF (Network Exposure Function), an NRF (Network Repository Function), a UDM (Unified Data Management), an AUSF (Authentication Server Function), a PCF (Policy Control Function), and an AF (Application Function). The AMF, the SMF, the NSSF, the NEF, the NRF, the UDM, the AUSF, the PCF, and the AF are network node apparatuses 30 that are interconnected via interfaces Namf, Nsmf, Nnssf, Nnef, Nnrf, Nudm, Nausf, Npcf, and Naf based on their respective services.

The SMF is a network node apparatus 30 having functions such as session management, IP (Internet Protocol) address assignment and management for a UE, a DHCP (Dynamic Host Configuration Protocol) function, an ARP (Address Resolution Protocol) proxy, a roaming function, and the like. The NEF is a network node apparatus 30 having a function of notifying other NFs (Network Functions) of capabilities and events. The NSSF is a network node apparatus 30 having functions of selecting a network slice to which the UE is connected, determining an allowed NSSAI (Network Slice Selection Assistance Information), determining an NSSAI to be set, determining an AMF set to which the UE is connected, and the like. The PCF is a network node apparatus 30 having a function of performing policy control of the network. The AF is a network node apparatus 30 having a function of controlling the application server. The NRF is a network node apparatus 30 having a function of discovering an NF instance that provides a service. The UDM is a network node apparatus 30 that manages subscriber data and authentication data. The UDM is connected to a UDR (User Data Repository) that stores the data.

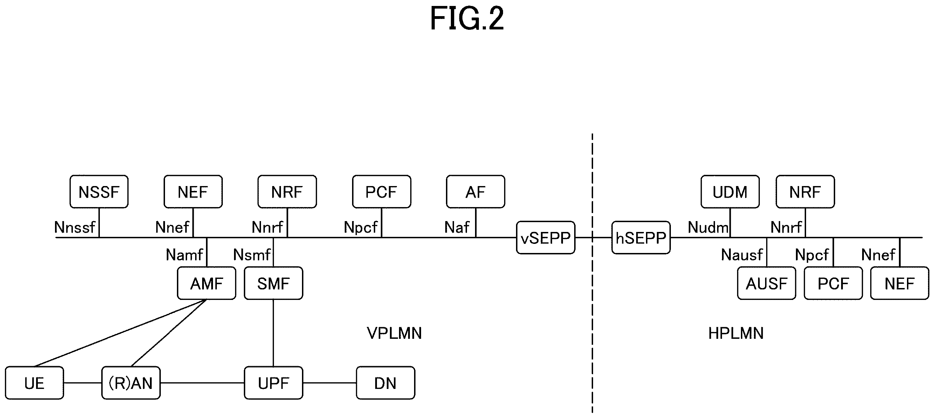

FIG. 2 is a diagram for explaining an example of a communication system in a roaming environment. As shown in FIG. 2, the network includes a UE which is a terminal 20 and a plurality of network node apparatuses 30. Hereinafter, it is assumed that one network node apparatus 30 corresponds to each function, but one network node apparatus 30 may realize a plurality of functions, or a plurality of network node apparatuses 30 may realize one function. In addition, "connection" described below may be logical connection or physical connection.

The RAN is a network node apparatus 30 having a radio access function, and is connected to the UE, the AMF, and the UPF. The AMF is a network node apparatus 30 having functions of termination of a RAN interface, termination of a NAS, registration management, connection management, reachability management, mobility management, and the like. The UPF is a network node apparatus 30 having functions such as a PDU session point for externally interconnecting with the DN, packet routing and forwarding, and user plane QoS handling. The UPF and the DN constitute a network slice. In the radio communication network according to the embodiment of the present invention, a plurality of network slices are constructed.

The AMF is connected to the UE, the RAN, the SMF, the NSSF, the NEF, the NRF, the UDM, the AUSF, the PCF, the AF, and an SEPP (Security Edge Protection Proxy). The AMF, the SMF, the NSSF, the NEF, the NRF, the UDM, the AUSF, the PCF, and the AF are network node apparatuses 30 that are interconnected via interfaces Namf, Nsmf, Nnssf, Nnef, Nnrf, Nudm, Nausf, Npcf, Naf based on their respective services.

The SMF is a network node apparatus 30 having functions such as session management, IP address allocation and management for a UE, a DHCP function, an ARP proxy, and a roaming function. The NEF is a network node apparatus 30 having a function of notifying other NFs of capabilities and events. The NSSF is a network node apparatus 30 having functions such as selection of a network slice to which the UE connects, determination of an allowed NSSAI, determination of an NSSAI to be configured, and determination of an AMF set to which the UE connects. The PCF is a network node apparatus 30 having a function of performing policy control of the network. The AF is a network node apparatus 30 having a function of controlling the application server. The NRF is a network node apparatus 30 having a function of discovering an NF instance that provides a service. The SEPP is a non-transparent proxy that filters control plane messages between PLMNs (Public Land Mobile Networks). The vSEPP shown in FIG. 2 is an SEPP in the visited network, and the hSEPP is an SEPP in the home network.

As shown in FIG. 2, the UE is in a roaming environment connected to the RAN and the AMF in a VPLMN (Visited PLMN). The VPLMN and the HPLMN (Home PLMN) are connected via vSEPP and hSEPP. The UE may communicate with the UDM of the HPLMN via the AMF of the VPLMN, for example.

The operation in the present embodiment may be performed by either of the configurations shown in FIGS. 1 and 2. The operation of the present embodiment may be performed in a configuration other than the configurations shown in FIGS. 1 and 2.

In the NEF described above, an API (Application Programming Interface) that can be called from the AF can be implemented by applying a CAPIF (Common API Framework) architecture. The CAPIF architecture provides a mechanism for supporting service API operation, for example, allowing an API invoker to discover a service API provided by an API provider and to perform communication using the service API. The CAPIF architecture also includes a mechanism for hiding a topology of a PLMN trust domain from, for example, an API invoker accessing a service API from outside the PLMN trust domain.

The application 30A of the API invoker described below may be provided in the AF, and the API-providing-function (AEF) 30C may be provided in the NEF, but the present invention is not limited to this, and the application 30A and the AEF 30C of the API invoker may be provided in any network node apparatus 30. The AEF 30C may be provided in the base station 10. The application 30A of the API invoker may be provided in the terminal 20.

A resource owner 40 (resource owner apparatus) described later may be the network node apparatus 30, the terminal 20, the base station 10, or an apparatus other than these.

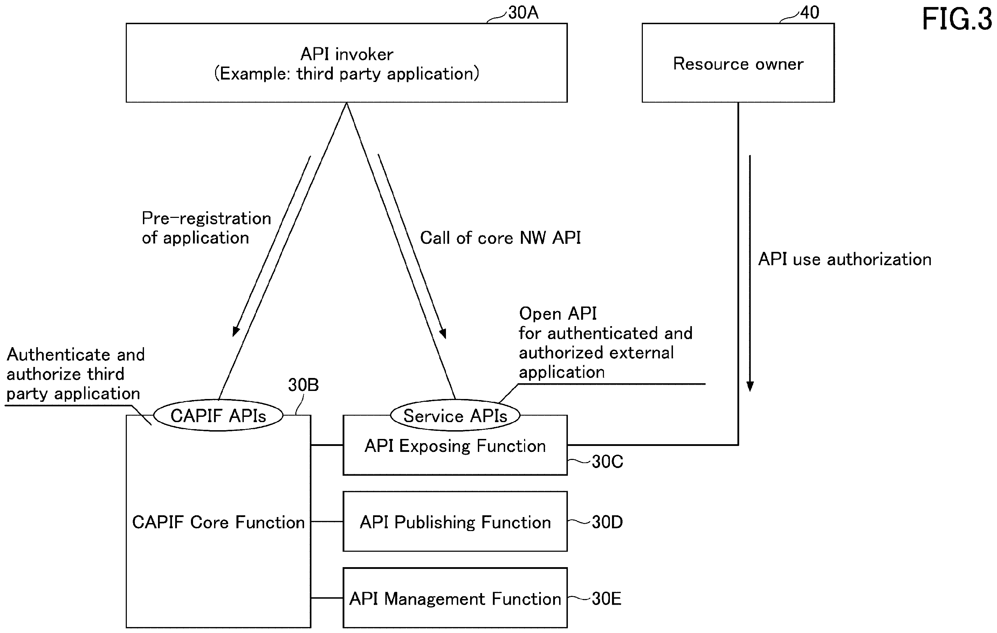

FIG. 3 is a diagram illustrating an example of an API call. In the 3GPP core network, an API is opened for an external application, and the API can be called from a third party application to the network node apparatus 30. When calling an API, a CAPIF Core Function (also referred to as CCF) in the core network authenticates and/or authorizes a caller application (API invoker) and manages which application can call the API.

As shown in FIG. 3, an API caller application 30A is pre-registered with a CAPIF core function 30B using a CAPIF API. The CAPIF core function 30B authenticates and authorizes the third party application 30A. As illustrated in FIG. 3, a service API is opened by an API Exposing Function (also referred to as AEF) 30C for the authenticated and authorized application 30A, and the API-caller application 30A can use a function of the API by calling the API.

The APF 30D (API Publishing Function) has a function of publishing a service API information of an API provider to the CAPIF core function 30B. The AMF (API Management Function) 30E includes various management functions related API calling.

In addition, by extending CAPIF, a resource owner 40 can authorize use of API for the AEF 30C. However, in the present embodiment, the function of the resource owner 40 to authorize the AEF 30C to use an API may not be provided. The resource owner 40 may be referred to as a network node apparatus, a terminal, a resource owner apparatus, a communication apparatus, etc.

### (Problem)

For example, it is assumed that the API-caller application 30A (API invoker) is a server of a third party that can perform an operation of acquiring position information of a user's terminal by an API call, and that the terminal is the resource owner 40.

In this case, the resource owner may be affected by the API call for acquiring the position information. For example, the position information that the resource owner acquired by a GPS is obtained from the outside, and the privacy of (the user of) the resource owner 40 may be violated.

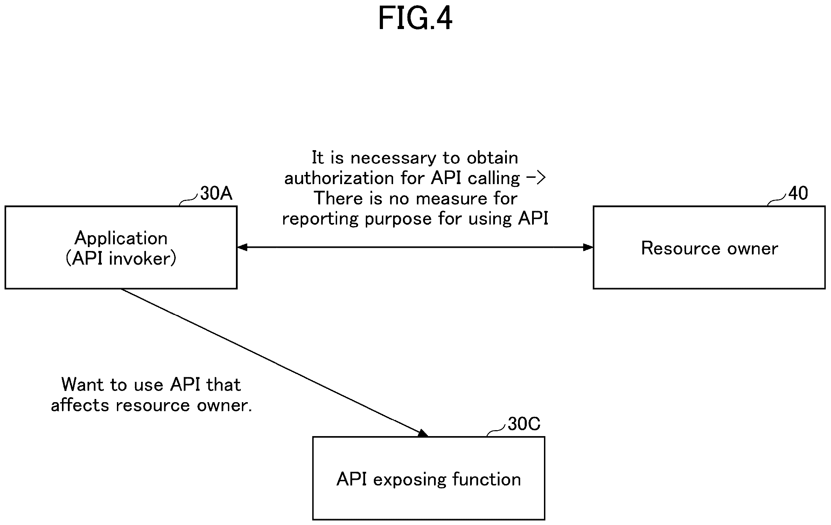

Therefore, as shown in FIG. 4, when the API-caller application 30A performs an API call that may affect the resource owner 40, it is desirable that the API caller application 30A notifies the resource owner 40 of the purpose of calling the API and obtains authorization from the resource owner 40. Further, from the viewpoint of the resource owner 40, it is desirable to determine whether or not to permit the API call based on the purpose of the API call by the API caller application 30A.

However, as illustrated in FIG. 4, in the related art, since there is no mechanism for notifying the resource owner 40 of the purpose of an API call from the API caller application 30A, the resource owner 40 cannot determine whether to authorize the API call. In addition, the API caller application 30A cannot obtain permission for the API call.

An operation example according to the present embodiment for solving this problem will be described below.

### (Operation example according to embodiment)

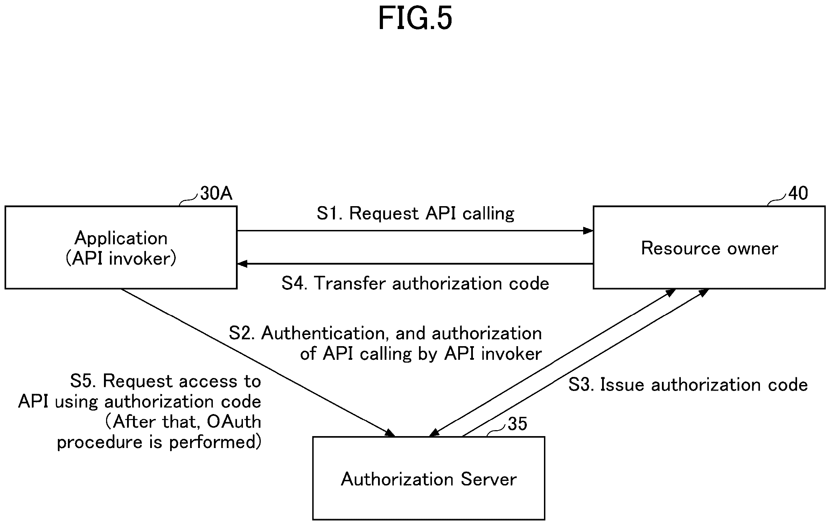

In the present embodiment, as shown in FIG. 5, an authorization server 35 is provided. The authorization server 35 is a kind of a network node apparatus. The authorization server 35 may include a function of the AEF 30C, may include a function of the CAPIF core function 30B, may be a network node apparatus including both the AEF 30C and the CAPIF core functions 30B, or may be a network node apparatus that is neither the AEF 30C nor the CAPIF core functions 30B.

In the present embodiment, OAuth 2.0 Authorization Code Flow is used as an example. OAuth 2.0 Authorization Code Flow has a mechanism for redirecting a user terminal to an authorization server. In the present embodiment, the API caller application 30A redirects the resource owner 40 to the authorization server 35 in the same manner as this mechanism. The API-caller application 30A notifies the resource owner 40 of a purpose of calling the API in the instruction of the redirection. As a result, the API caller application 30A acquires an authorization code required for a subsequent API call request. The authorization code may be referred to as authorization information. Further, an access token is acquired using the authorization code. The access token may be referred to as access authorization information.

Note that information (purpose information) indicating the purpose of calling an API, which is notified from the API caller application 30A to the resource owner 40, is not limited to specific information. The purpose information includes, for example, a function of an API to be called, a method of using the API to be called, a name of the API to be called, identification information of the API to be called, and the like.

Referring to FIG. 5, an outline of a procedure for the API caller application 30A to obtain authorization of API call will be described.

In S1, the API caller application 30A notifies the resource owner 40 of a message including a purpose of API call. In the example of FIG. 5, the message corresponds to a request for an API call.

The API caller application 30A causes the resource owner 40 to access the authorization server 35 and causes the resource owner 40 and the authorization server 35 to perform authentication and authorization processing in the same manner as the mechanism of the OAuth 2.0 Authorization Code Flow (S2 in FIG. 5).

When the API call is authorized by the authorization server 35, an authorization code is issued from the authorization server 35 to the resource owner 40 in S3. In S4, the resource owner 40 passes the authorization code to the API caller application 30A.

In S5, the API caller application 30A requests the authorization server 35 to access a target API using the authorization code.

Thereafter, in the same manner as the procedure of the OAuth 2.0 Authorization Code Flow, the authorization server 35 issues an access token to the API caller application 30 when verification of the authorization code is successful. The API caller application 30 calls a service API using the access token.

Note that, in the present embodiment, the procedure of the OAuth 2.0 Authorization Code Flow is used, but this is merely an example. The authorization process may be performed without using the procedure of the OAuth 2.0 Authorization Code Flow.

### <Sequence Example>

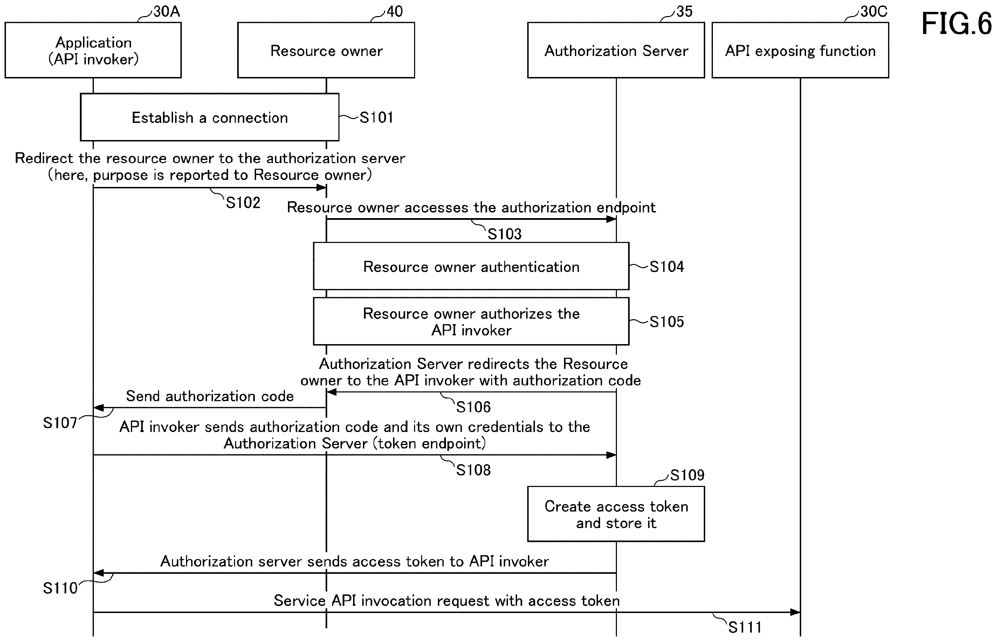

Next, a more detailed operation example in the present embodiment will be described with reference to a sequence diagram of FIG. 6. In the following operations (including variations), as an example, it is assumed that the resource owner 40 is a terminal (for example, a smartphone) including a browser, and the API caller application 30A and the authorization server 35 are apparatuses having a web server function (apparatuses capable of displaying a web page on the terminal).

In S101, a connection is established between the API caller application 30A and the resource owner 40.

In S102, the API caller application 30A redirects the resource owner 40 to the authorization server 35. In the procedure of S102, the resource owner 40 is notified of a purpose of the API call (purpose information).

In S103, the resource owner 40 accesses the authorization server 35 (more specifically, the authorization endpoint) and transmits an authorization request to the authorization server 35. This authorization request may be one transmitted from the API caller application 30A to the resource owner 40 in S102.

Here, it is assumed that the purpose of the API call, which was notified by the API caller application 30A to the resource owner 40, is notified by the resource owner 40 to the authorization server 35 by redirecting in step S103.

In S104, the authorization server 35 authenticates the resource owner 40. The authentication method may be any method, and for example, the authorization server 35 may request the resource owner 40 to transmit an ID/password, and the resource owner 40 may transmit the ID/ password to the authorization server 35 to perform authentication. Here, it is assumed that the authentication is successful.

In S105, a process is executed in which the resource owner 40 determines whether or not to authorizes the API call of the API caller application 30A.

The method by which the resource owner 40 decides whether to authorize or deny an API call based on its purpose is not restricted to any specific method. For example, the resource owner 40 may maintain a correspondence between purposes and authorize/deny, such as "Purpose 1 - Authorize" or "Purpose 2 - Deny". In step S105, the resource owner 40 may receive the purpose from the authorization server 35 and decide to authorize or deny the API call based on this purpose and the maintained information.

Also, the resource owner 40 may determine whether to authorize an API call based on an input by the user of the resource owner 40.

For example, the authorization server 35 displays a web page describing the purpose on a display of the resource owner 40, and the user of the resource owner 40 inputs authorization or denial. For example, if the input content is "authorize", the information of "authorize" is notified to the authorization server 35. Accordingly, redirection of S106 is performed.

As an example, suppose the API to be called is an API that performs "User profile lookup" and the purpose of the API call is "Linkage of profile information with the application 30A." In this case, a message from the authorization server 35 is displayed to the resource owner 40, asking "Is it okay to perform the User profile lookup?", and, a message stating "Purpose: Linkage of profile information with application 30A" is displayed, along with "Yes" and "No" buttons. The user can then click "Yes" (authorize) or "No" (deny).

When the use of the API is authorized (approved) by the resource owner 40 and the information indicating that the API has been authorized is notified to the authorization server 35, in step S106, the authorization server 35 issues an authorization code and returns a message to the resource owner 40 instructing a redirection to the API caller application 30A, including the authorization code. In other words, in step S106, the authorization server 35 redirects the resource owner 40 to the API caller application 30A. The message for redirecting includes the authorization code.

In S107, the resource owner 40 sends the authorization code to the API caller application 30A.

In step S108, the API caller application 30A sends the authorization code to the authorization server 35 (specifically, a token endpoint). Here, the API caller application 30A also sends a credential (which may be referred to as authentication information) to the authorization server 35 to indicate that the API caller application 30A is valid.

In S109, the authorization server 35 that has received the authorization code creates an access token. In S110, the authorization server 35 sends the access token to the API caller application 30A.

In Sill, the API caller application 30A sends an API call request to the AEF 30C with an access token.

The AEF 30C confirms validity of the access token by accessing the authorization server 35, for example.

<Variation of Sequence>

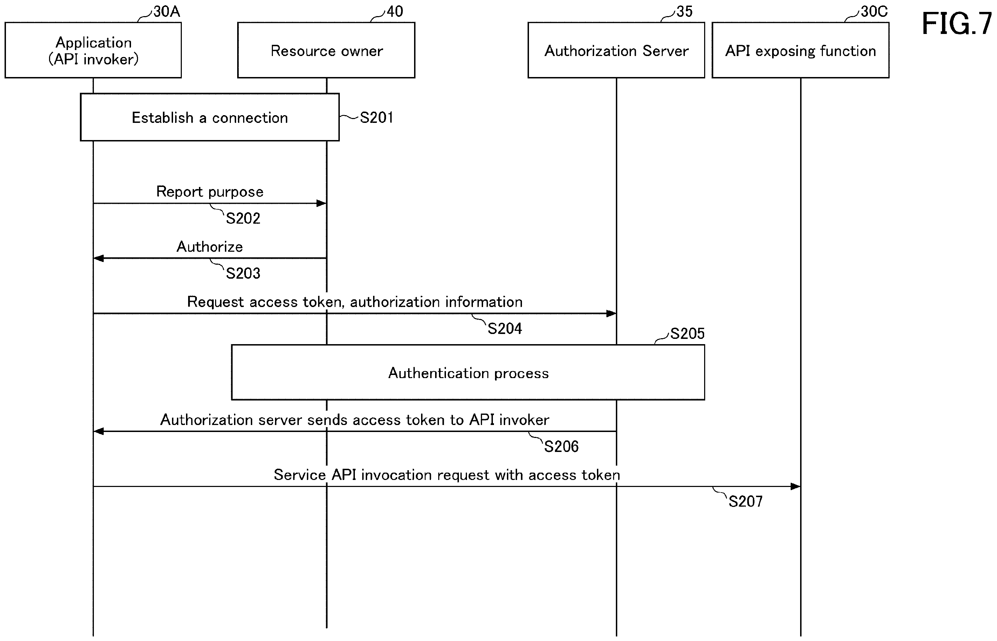

In the process illustrated in FIG. 6, the resource owner 40 determines whether or not to authorize an API call in S105. However, such process is an example. For example, a process of a sequence shown in FIG. 7 can be executed.

In S201, a connection is established between the API caller application 30A and the resource owner 40.

] In S202, the API caller application 30A sends a message to the resource owner 40 containing a purpose of an API call. The resource owner 40 that has received the message determines whether or not to authorize the API call. In S203, the resource owner 40 notifies the API caller application 30A of the determination result. Here, it is assumed that the determination result is "authorized".

The method by which the resource owner 40 decides whether to authorize or deny an API call based on its purpose is not restricted to any specific method. For example, the resource owner 40 may maintain a correspondence between purposes and authorizations/denials, such as "Purpose 1 - Authorize" or "Purpose 2 - Deny," and determine whether to authorize the API call based on the purpose received in step S202 and this correspondence.

The resource owner 40 may determine whether to authorize the API call based on an input by the user of the resource owner 40.

For example, in S202, the API caller application 30A displays a Web page describing a purpose on the display of the resource owner 40, and the user of the resource owner 40 inputs authorization or denial. For example, if the input content is "authorization", the information of " authorization " is notified to the API caller application 30A in S203.

In S204, the API caller application 30A sends an access token request and authorization information (which may be referred to as an authorization code) to the authorization server 35. The authorization information is information indicating that the resource owner 40 authorizes an API call. In S204, the API caller application 30A may also send, to the authorization server 35, a credential (which may be referred to as authentication information) indicating that the API caller application 30A is valid.

In S205, the authorization server 35 identifies the resource owner 40 from the authorization information and authenticates the resource owner 40. The authentication method may be any method, and for example, the authorization server 35 may request the resource owner 40 to transmit an ID/password, and the resource owner 40 may transmit the ID/password to the authorization server 35 to perform authentication. Here, it is assumed that the authentication is successful.

The authorization server 35 creates an access token. In S206, the authorization server 35 sends the access token to the API caller application 30A.

In S207, the API caller application 30A sends an API call request to the AEF 30C with an access token.

The AEF 30C verifies the validity of the access token by, for example, accessing the authorization server 35, and if the validity is confirmed, executes the API.

### (Specific System Configuration Example)

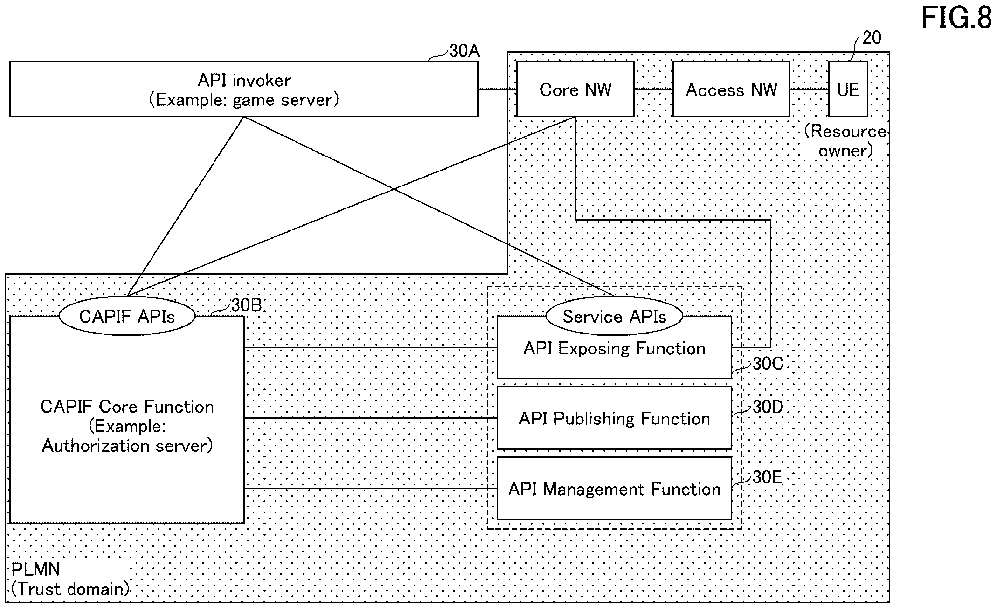

FIG. 8 shows a specific configuration example of the system according to the present embodiment, assuming a 5G system. In FIG. 8, as an example, a case is illustrated where the UE (terminal) 20 is the resource owner 40 and the AEF 30C is the authorization server.

In the example of FIG. 8, the CCF 30B including CAPIF-API, the AEF 30C including a service API, the APF (API Publishing Function) 30D, the AMF (API Management Function) 30E, the UE 20 (for example, a resource owner), the core network, and the access network belong to a PLMN (PLMN Trust domain) which is a trusted domain. On the other hand, the API caller 30A (e.g., a game server) exists outside the PLMN.

As shown in FIG. 8, the UE 20 may be connected to the API caller 30A, the AEF 30C, and the CCF 30B via the access network and the core network.

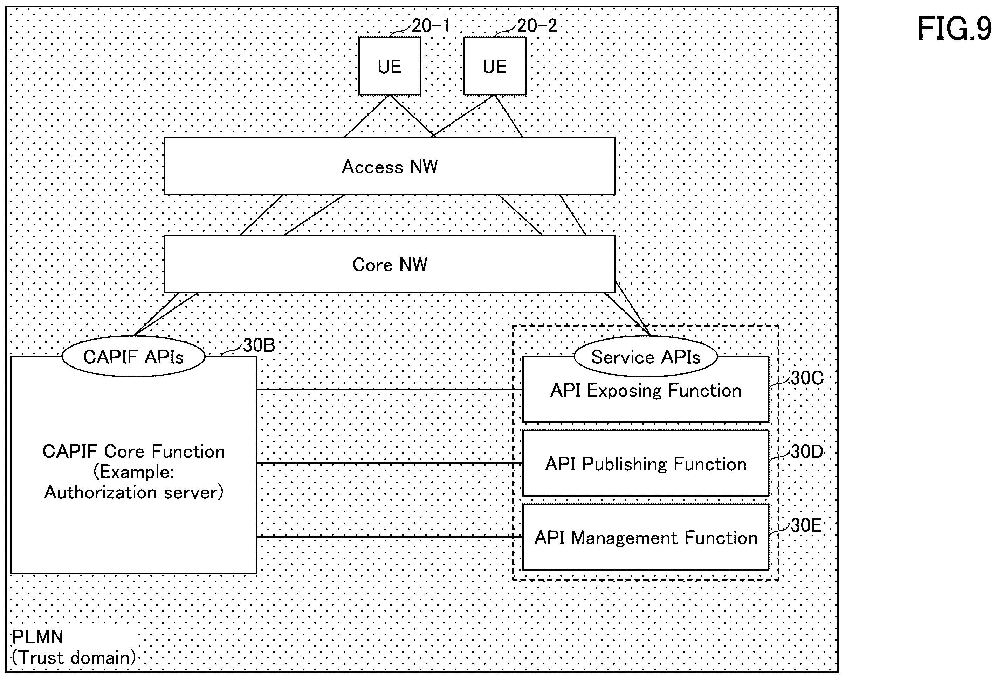

FIG. 9 is a diagram showing another example of the system configuration. As shown in FIG. 9, the CCF 30B including the CAPIF-API, the AEF 30C including the service API, the APF 30D, the AMF 30E, a UE 20-1, a UE 20-2, the core network, and the access network belong to the PLMN which is a trusted domain. The UE 20-1 includes, for example, an API caller application. The UE 20-2 is, for example, the resource owner 40. Note that the functions of the application and the resource owner may be provided in the same apparatus (terminal or the like).

As shown in FIG. 9, the UE 20-1 may be connected to the CCF 30B and the AEF 30C via the access network and the core network. The UE 20-2 may be connected to the CCF 30B and the AEF 30C via the access network and the core network.

Note that Figs 8 and 9 show an example of the system configuration, and the present embodiment is not limited to this. For example, the AEF 30C, the APF 30D, and the AMF 30E may be outside the trusted PLMN domain.

### (Effects of Embodiment)

With the technology described above, it becomes possible for the resource owner 40 to determine whether to authorize or deny an API call even from the API caller application 30A (API invoker) whose purpose (including usage) of the API call is unclear, such as third-party servers.

### (Apparatus Configuration)

Next, functional configuration examples of the base station 10, the network node apparatus 30, the resource owner 40, and the terminal 20 that perform the processes and operations described above will be described. The authorization server 35 is a kind of the network node apparatus 30. The base station 10, the network node apparatus 30, the resource owner 40 and the terminal 20 include functions for carrying out the above-described operations. However, each of the base station 10, the network node apparatus 30, and the terminal 20 may include only some functions of the above-described operations. Note that the base station 10, the network node apparatus 30, the resource owner 40, and the terminal 20 may all be referred to as a "communication apparatus".

### <Base Station 10 and Network node apparatus 30>

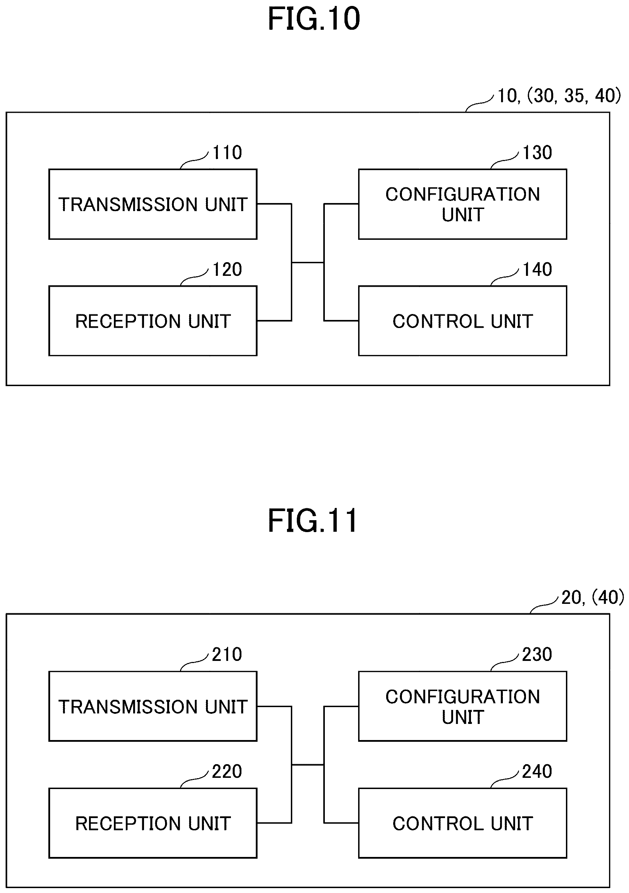

FIG. 10 is a diagram illustrating an example of a functional configuration of the base station 10. As illustrated in FIG. 10, the base station 10 includes a transmission unit 110, a reception unit 120, a configuration unit 130, and a control unit 140. The functional configuration shown in FIG. 10 is merely an example. The functional sections and the names of the functional units may be any as long as the operations according to the embodiment of the present invention can be performed.

Note that the network node apparatus 30 (for example, the network node apparatus 30 having the function of the AEF 30C, the authorization server 35, and the like) may have the same functional configuration as the base station 10 illustrated in FIG. 10. The network node apparatus 30 having a plurality of different functions on the system architecture may be configured by a plurality of network node apparatuses 30 separated for each function. Further, the network node apparatus 30 is not limited to a network node apparatus existing in a core network or an access network, and may correspond to a network node apparatus belonging to a PLMN domain. The resource owner 40 may also have the functional configuration illustrated in FIG. 10.

The transmission unit 110 includes a function of generating a signal to be transmitted to the terminal 20 or another network node apparatus 30 and transmitting the signal in a wired or wireless manner. The reception unit 120 includes a function of receiving various signals transmitted from the terminal 20 or another network node apparatus 30 and acquiring, for example, information of a higher layer from the received signals.

The configuration unit 130 stores various kinds of configuration information in a storage device and reads the configuration information from the storage device as necessary.

The control unit 140 controls the entire apparatus. The functional unit related to signal transmission in the control unit 140 may be included in the transmission unit 110, and the functional unit related to signal reception in the control unit 140 may be included in the reception unit 120.

### <Terminal 20>

FIG. 11 is a diagram illustrating an example of a functional configuration of the terminal 20. As illustrated in FIG. 11, the terminal 20 includes a transmission unit 210, a reception unit 220, a configuration unit 230, and a control unit 240. The functional configuration shown in FIG. 11 is merely an example. The functional sections and the names of the functional units may be any as long as the operations according to the embodiment of the present invention can be performed. The terminal 20 may function as the resource owner 40.

The transmission unit 210 creates a transmission signal from transmission data and transmits the transmission signal by radio. The reception unit 220 receives various signals by radio and acquires a signal of a higher layer from the received signal of the physical layer. Further, the reception unit 220 has a function of receiving an NR-PSS, an NR-SSS, an NR-PBCH, a DL/UL control signal, a reference signal, or the like transmitted from the base station 10 or the network node apparatus 30.

The configuration unit 230 stores various configuration information received from the base station 10 or the network node apparatus 30 by the reception unit 220 in a storage device, and reads the information from the storage device as necessary.

The control unit 240 performs, for example, processing related to connection control to a network and a network slice. The functional unit related to signal transmission in the control unit 240 may be included in the transmission unit 210, and the functional unit related to signal reception in the control unit 240 may be included in the reception unit 220. In a case where the terminal 20 functions as the resource owner 40, the terminal 20 may include a display capable of input and output similar to a smartphone or the like.

### <Supplementary Notes>

According to the present embodiment, at least a communication apparatus, a network node apparatus, a system, and a communication method described in items 1 to 6 below are provided.

### (Item 1)

A communication apparatus including:
a reception unit configured to receive purpose information indicating a purpose of an API call from a first network node apparatus that performs the API call; and
a control unit configured to determine whether to authorize execution of the API call based on the purpose information.

### (Item 2)

The communication apparatus as described in item 1, wherein the control unit determines whether to authorize execution of the API call based on the purpose information presented from a second network node apparatus that is a destination of redirection by an instruction from the first network node apparatus.

### (Item 3)

A network node apparatus including:
a transmission unit configured to transmit purpose information indicating a purpose of an API call to a communication apparatus; and
a reception unit configured to receive access authorization information from an apparatus that issues the access authorization information when execution of the API call is authorized based on the purpose information.

### (Item 4)

The network node apparatus as claimed in item 3,
wherein, when execution of the API call is authorized based on the purpose information, the transmission unit transmits, to the apparatus, authorization information indicating that execution of the API call is authorized.

### (Item 5)

A communication system including:
a communication apparatus including:
   a reception unit configured to receive purpose information indicating a purpose of an API call from a network node apparatus that performs the API call; and
   a control unit configured to determine whether to authorize execution of the API call based on the purpose information, and
a network node apparatus including:
   a transmission unit configured to transmit the purpose information to the communication apparatus; and
   a reception unit configured to receive access authorization information from an apparatus that issues the access authorization information when execution of the API call is authorized based on the purpose information.

### (Item 6)

A communication method executed by a communication apparatus, the communication method including:
receiving purpose information indicating a purpose of an API call from a first network node apparatus that performs the API call; and
determining whether to authorize execution of the API call based on the purpose information.

Any of the items 1 to 6 provides a technique that enables a communication apparatus that may be affected by an API call to determine whether to authorize the API call. According to the item 2, it is possible to determine whether or not to authorize the API call by using a mechanism of redirection. According to the item 4, authorization information (e.g., an authorization code) can be transmitted to an apparatus that issues access authorization information.

### (Hardware Configuration)

The block diagrams (FIGS. 10 and 11) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

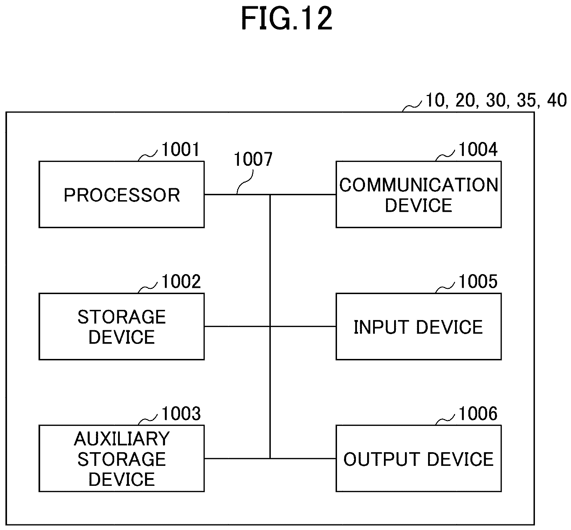

For example, the network node apparatus 30, the terminal 20 and the like in one embodiment of this disclosure may function as a computer for performing the processing of a radio communication method of this disclosure. FIG. 12 is a diagram illustrating an example of a hardware configuration of the base station 10, the terminal 20, the network node apparatus 30 and the resource owner 40 and the like according to one embodiment of this disclosure. Each apparatus described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10, the terminal 20, the network node apparatus 30 and the resource owner 40 and the like may be configured to include one or a plurality of apparatuses illustrated in the drawings, or may be configured not to include a part of the apparatuses.

Each function of the base station 10, the terminal 20, the network node apparatus 30 and the resource owner 40 and the like is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 shown in FIG. 10 may be attained by a control program that is stored in the storage device 1002 and is operated by the processor 1001. Also, for example, the control unit 240 shown in FIG. 11 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10, the terminal 20, the network node apparatus 30 and the resource owner 40 and the like may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

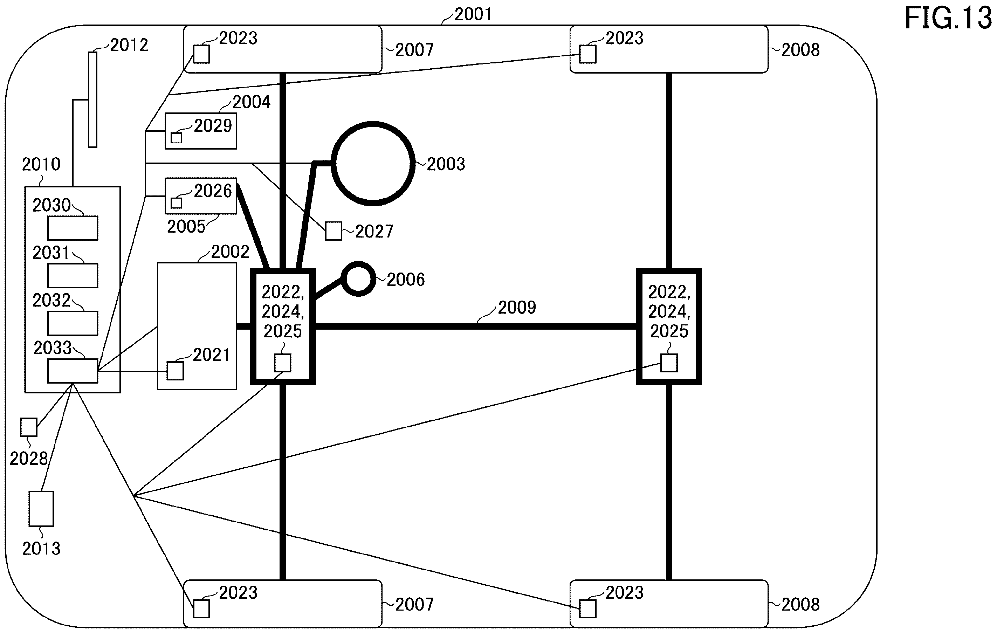

Each of or any one or a plurality of the terminal 20, the base station 10, the network node apparatus 30 and the resource owner 40 may be provided in a vehicle 2001. FIG. 13 shows a configuration example of a vehicle 2001 according to the present embodiment. As shown in FIG. 13, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. For example, all functions or any function of the terminal 20, the base station 10, the network node apparatus 30 and the resource owner 40 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10, the terminal 20, the network node apparatus 30, and the resource owner 40 and the like have been described by using a functional block diagram, but such an apparatus may be attained by hardware, software, or a combination thereof. Each of software that is operated by a processor of the base station 10, the terminal 20, the network node apparatus 30, and the resource owner 40 and the like according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, 4th generation mobile communication system (4G), 5th generation mobile communication system (5G), future radio access (FRA), new radio (NR), W-CDMA (Registered Trademark), GSM (Registered Trademark), CDMA2000, ultra mobile broadband (UMB), IEEE 802.11 (Wi-Fi (Registered Trademark)), IEEE 802.16 (WiMAX (Registered Trademark)), IEEE 802.20, ultra-wideband (UWB), Bluetooth (Registered Trademark), and other suitable systems and a next-generation system that is expanded, modified, generated or defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may be different for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
30 network node
35 authorization server
40 resource owner
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A communication apparatus comprising:
a reception unit configured to receive purpose information indicating a purpose of an API call from a first network node apparatus that performs the API call; and
a control unit configured to determine whether to authorize execution of the API call based on the purpose information.

2. The communication apparatus as claimed in claim 1,
wherein the control unit determines whether to authorize execution of the API call based on the purpose information presented from a second network node apparatus that is a destination of redirection by an instruction from the first network node apparatus.

3. A network node apparatus comprising:
a transmission unit configured to transmit purpose information indicating a purpose of an API call to a communication apparatus; and
a reception unit configured to receive access authorization information from an apparatus that issues the access authorization information when execution of the API call is authorized based on the purpose information.

4. The network node apparatus as claimed in claim 3,
wherein, when execution of the API call is authorized based on the purpose information, the transmission unit transmits, to the apparatus, authorization information indicating that execution of the API call is authorized.

5. A communication system comprising:
a communication apparatus comprising:
a reception unit configured to receive purpose information indicating a purpose of an API call from a network node apparatus that performs the API call; and
a control unit configured to determine whether to authorize execution of the API call based on the purpose information, and
a network node apparatus comprising:
a transmission unit configured to transmit the purpose information to the communication apparatus; and
a reception unit configured to receive access authorization information from an apparatus that issues the access authorization information when execution of the API call is authorized based on the purpose information.

6. A communication method executed by a communication apparatus, the communication method comprising:
receiving purpose information indicating a purpose of an API call from a first network node apparatus that performs the API call; and
determining whether to authorize execution of the API call based on the purpose information.
